Europäisches Patentamt

(19) European Patent Office

Office européen des brevets

(11) **EP 0 940 609 A2**

(12) **EUROPEAN PATENT APPLICATION**

(43) Date of publication:
08.09.1999 Bulletin 1999/36

(51) Int. Cl.$^6$: **F16J 15/32**

(21) Application number: 99104196.3

(22) Date of filing: 02.03.1999

(84) Designated Contracting States:
AT BE CH CY DE DK ES FI FR GB GR IE IT LI LU
MC NL PT SE
Designated Extension States:
AL LT LV MK RO SI

(30) Priority: 03.03.1998 JP 5084498

(71) Applicant:
Kabushiki Kaisha
Toyoda Jidoshokki Seisakusho
Aichi-ken (JP)

(72) Inventors:
• Kato, Takayuki
K.K.Toyoda Jidoshokki Seisakusho
Kariya-shi, Aichi-ken (JP)

• Yamada, Takeshi
K.K.Toyoda Jidoshokki Seisakusho
Kariya-shi, Aichi-ken (JP)
• Sato, Shinichi
K.K.Toyoda Jidoshokki Seisakusho
Kariya-shi, Aichi-ken (JP)
• Hirano, Yuka
K.K.Toyoda Jidoshokki Seisakusho
Kariya-shi, Aichi-ken (JP)

(74) Representative:
Pellmann, Hans-Bernd, Dipl.-Ing. et al
Patentanwaltsbüro
Tiedtke-Bühling-Kinne & Partner
Bavariaring 4
80336 München (DE)

(54) **Shaft sealing structure**

(57) An easy-to-install sealing unit (40) has a structure for preventing unseating. The sealing unit (40) includes a first annular elastic projection (451) and second and third elastic annular projections (452, 453). The radial dimensions (h1, h2, h3) of the three projections (451, 452, 453) are equal. An annular groove (39) is formed in the inner wall (37) of a housing. When the sealing unit (40) is press fitted against the wall (37), the second and third annular projections (452, 453) are compressed by an amount (t2, t3). The first annular projection (451) is temporarily compressed by an amount (t1) while the sealing unit (40) is being installed. When the sealing unit (40) is installed, the first annular projection (451) regains its original shape and occupies the engaging groove (39a).

Fig.1

EP 0 940 609 A2

**Description**

BACKGROUND OF THE INVENTION

The present invention relates to sealing structure for a compressor housing that includes a recess and a seal fitted in the recess. Specifically, the present invention pertains to a sealing structure of a compressor having a drive shaft.

Compressors, which mechanically process fluid, require a housing that has a sealed inner space. Thus, a typical compressor has a seal in the vicinity of a member that transmits power from the outside to the mechanism in the housing, for example, in the vicinity of a drive shaft. A compressor used in vehicle air conditioners includes a housing and a drive shaft, which extends from the interior of the housing to the outside. The drive shaft is rotatably supported by a pair of radial bearings located at the front and rear walls of the housing. An annular lip seal is located in the vicinity of each radial bearing. The lip seals seal between the drive shaft and a part of the housing wall that surrounds the drive shaft. A fastener such as a snap ring is often located next to each lip seal for preventing the drive shaft from moving axially.

The size of the fasteners such as snap rings must match the diameter of circular wall formed in the housing. In other words, customized fasteners must be prepared. This increases the manufacturing cost. Using such customized parts requires careful inventory management for preventing a shortage of the parts.

In order to solve this problem, various types of seals that require no fasteners have been proposed. For example, Japanese Unexamined Utility Model Publication No. 58-79169 discloses a sealing structure having an annular rubber seal. This seal includes an annular projection on its outer circumference. The projection is integrally formed with the seal. The seal is fitted in a circular recess having an annular groove. The annular projection of the seal is engaged with the annular groove of the recess. The engagement of the projection and the groove prevents the seal from moving axially.

The circumference of the seal directly contacts the surface of the recess and functions as a sealing surface. The radius of the annular projection is greater than that of the seal's circumference to prevent the seal from moving axially. Thus, when inserting the seal into the recess, contact between the annular projection and the wall of the recess creates an excessive resistance. The assembly of the seal is therefore troublesome.

SUMMARY OF THE INVENTION

It is an objective of the present invention to provide a sealing structure that prevents a seal from being displaced and facilitates assembly.

To achieve the foregoing and other objectives and in accordance with the purpose of the present invention, a sealing structure for sealing an opening of a housing is provided. The sealing structure includes an inner wall, an engaging groove and a sealing unit. The inner wall which is fixed with respect to the housing surrounds the opening. The engaging groove is formed in the inner wall. The sealing unit is press fitted against the inner wall and includes a central axis, an elastic sealing projection and an elastic engaging projection. The elastic sealing projection is formed on the outer surface of the sealing unit and is compressed and contacts the inner wall. The elastic engaging projection is formed on the outer surface of the sealing unit and is axially spaced from the sealing projection. The distance by which the engaging projection extends from the central axis is equal to or smaller than that of the sealing projection. When the sealing unit is fully installed, the engaging projection is engaged with the engaging groove.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the presently preferred embodiments together with the accompanying drawings.

Fig. 1 is a cross-sectional view illustrating a compressor having a sealing structure according to a first embodiment of the present invention;

Fig. 2 is a partial cross-sectional view showing the sealing structure of Fig. 1;

Fig. 3 is an enlarged partial cross-sectional view showing the seal unit and the seal chamber of Fig. 1 before assembly;

Fig. 4(A) is a graph showing the relationship between the protrusion amount of a first annular projection and the load applied on the seal unit during assembly;

Fig. 4(B) is a graph showing the relationship between the protrusion amount of the first annular projection and the load required for disengaging the annular projection from the corresponding groove;

Fig. 5 is an enlarged cross-sectional view showing the sealing structure (a seal unit and a seal chamber) according to a second embodiment; and

Fig. 6 is an enlarged cross-sectional view showing the sealing structure (a seal chamber) according to a third embodiment.

## DETAILED DESCRIPTION OF THE PREFERRED EMBODIMENTS

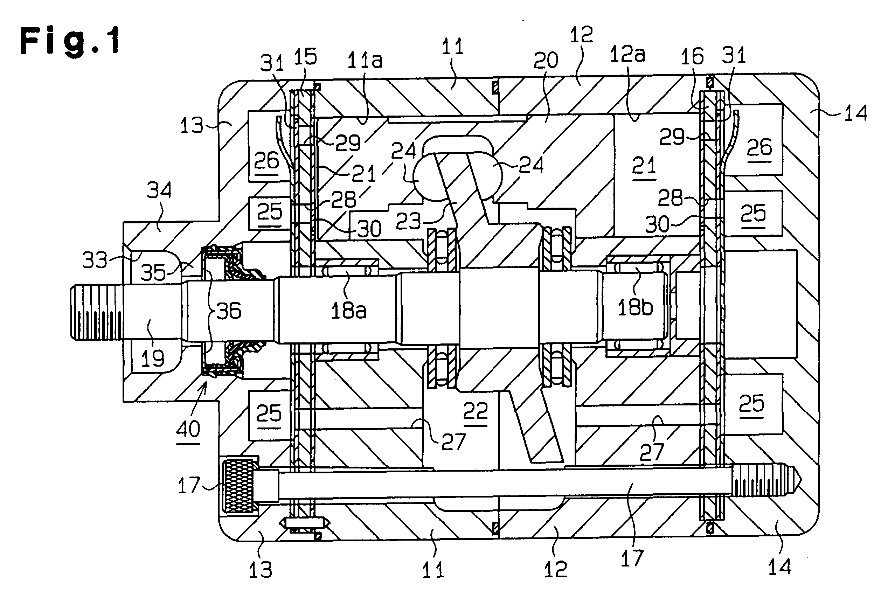

A sealing structure according to a first embodiment will now be described with reference to Figs. 1-4. The sealing structure is used in a swash plate type compressor having double-headed pistons. The compressor is used in a vehicle air conditioner.

As illustrated in Fig. 1, the compressor includes a pair of cylinder blocks 11, 12 and front and rear housings 13, 14. The cylinder blocks 11, 12 are coaxially joined together.

The front housing 13 is coupled to the front end of the front cylinder block 11 by way of a valve plate 15. The rear housing 14 is coupled to the rear end of the rear cylinder block 12 by way of a valve plate 16. The cylinder blocks 11, 12, the front and rear housings 13, 14 and the valve plates 15, 16 are fastened together by bolts 17 (only one is shown) and form a compressor housing.

A drive shaft 19 is rotatably supported by a pair of radial bearings 18a, 18b located in the front and rear cylinder blocks 11, 12. The drive shaft 19 is coupled to a vehicle engine (not shown) by an electromagnetic clutch (not shown). The clutch selectively transmits the power of the engine to the drive shaft 19.

Aligned pairs of cylinder bores 11a, 12a are defined in the cylinder blocks 11, 12 about the drive shaft 19. Fig. 1 shows only one of the pairs of the cylinder bores 11a, 12a. The cylinder bores 11a, 12a are parallel to the drive shaft 19. A double-headed piston 20 is housed in each pair of cylinder bores 11a, 12a. A compression chamber 21 is defined in each cylinder bore 11a, 12a by the head of the corresponding piston 20 and the corresponding valve plate 15, 16.

A crank chamber 22 is defined between the front cylinder block 11 and the rear cylinder block 12. The crank chamber 22 is connected to an external refrigeration circuit (not shown) through an inlet (not shown) of the compressor.

A swash plate 23 is fixed to the drive shaft 19 in the crank chamber 22. Each piston 20 is tiltably coupled to the swash plate 23 by a pair of shoes 24. Rotation of the drive shaft 19 and the swash plate 32 is converted into reciprocation of each piston 20 by the associated shoes 24.

Each of the front housing 13 and the rear housing 14 has an annular suction chamber 25 and an annular discharge chamber 26. Each suction chamber 25 surrounds the drive shaft 19 and is encompassed by the associated discharge chamber 26. The front and rear suction chambers 25 are connected to the crank chamber 22 by suction passages 27 formed in the cylinder blocks 11, 12. Refrigerant gas is drawn into the suction chambers 25 from the external refrigeration circuit and flows into the crank chamber 22 through the suction passage 27.

Each valve plate 15, 16 has suction ports 28 and discharge ports 29. Each suction port 28 and each discharge port 29 correspond to one of the cylinder bores 11a, 12a. Each suction port 28 has a suction valve flap 30. During a suction stroke, that is, when a piston head moves from the top dead center to the bottom dead center, the suction valve flap 30 allows refrigerant gas in the suction chamber 25 to enter the compression chamber 21. Each discharge port 29 has a discharge valve flap 31. During a compression stroke, a piston head moves from the bottom dead center to the top dead center and compresses the refrigerant gas in the compression chamber 21 to the discharge pressure. The discharge valve flap 31 then allows the compressed gas to be discharged to the discharge chamber 26. The gas is then discharged to the external refrigeration circuit through an outlet (not shown) of the compressor.

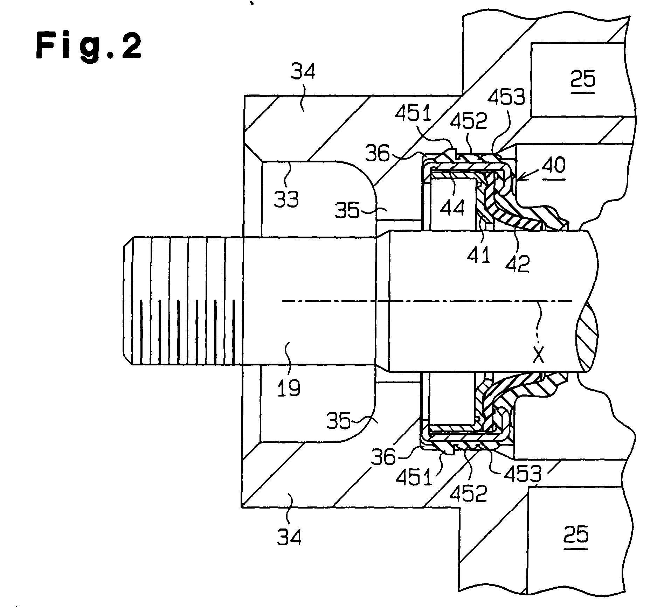

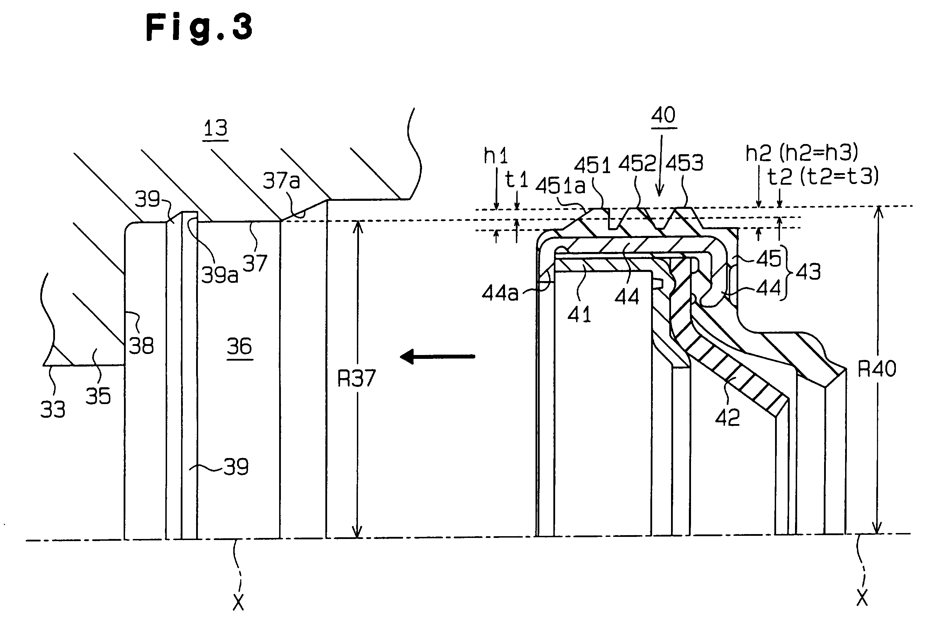

As illustrated in Figs. 1 and 2, the front housing 13 has a boss 34. The boss 34 defines a shaft hole 33, through which the drive shaft 19 extends. A rim 35 protrudes from the inner surface of the boss 34 toward the axis X of the drive shaft 19. A seal chamber 36 is defined next to the rim 35. As illustrated in Fig. 3, the seal chamber 36 includes a front wall 38 and a cylindrical wall 37. The front wall 38 is perpendicular to the axis X and the cylindrical wall 37 is coaxial with the axis X. The center of the cylindrical wall 37 coincides with the axis X. That is, the radius of the cylindrical wall 37 is R37. As illustrated in Figs. 1-3, an annular sealing unit 40 is press fitted in the seal chamber 36. The radius of the sealing unit 40 is R40. The sealing unit 40 seals between the drive shaft 19 and the cylindrical wall 37 of the seal chamber 36, which seals the housing and prevents refrigerant gas from leaking from the crank chamber.

As illustrated in Figs. 2 and 3, the sealing unit 40 includes a metal inner ring 41, an inner seal 42 and an outer seal 43. The inner ring 41 has a high rigidity. The inner seal 42 is an annular lip seal made of an elastic material such as fluorocarbon resin (for example, PTFE: polytetrafluoroethylene). The outer seal 43 includes a metal outer ring 44, or retaining member, and an outer seal sleeve 45 and encompasses the inner ring 41 and the inner seal 42. The outer ring 44 has a high rigidity. The inner ring 41 and the outer ring 44 maintain the shape of the sealing unit 40. The outer seal sleeve 45 is made of an elastic material such as synthetic rubber and is molded on the outer ring 44. The outer seal sleeve 45 includes three annular projections, that is, a first annular projection 451, a second annular projection 452 and a third annular projection 453. Each of the projections 451, 452 and 453 extends along the circumference of the sealing unit 40. The radial dimensions (protruding amount) of the projections 451, 452 and 453 are substantially the same. If the radial dimensions of the projections 451, 452 and 453 are represented by h1, h2 and h3, respectively, an equation h1=h2=h3 is satisfied. Thus, the distances from the axis X, which is common to the drive shaft and the sealing unit 40, to the edge of each projection 451, 452 and 453 are the same. In other words, the projections 451, 452 and 453 have a common outer radius R40. The first projection 451 has a tapered surface 451a on its front side.

As illustrated in Fig. 3, an annular groove 39 is formed in and extends along the entire circumference of the cylindrical wall 37. The shape and the location of the groove 39 correspond to those of the first projection 451. The rear wall 39a of the groove 39 is perpendicular to the axis X. The rear end of the first projection 451 engages with the rear wall 39a, which prevents the sealing unit 40 from disengaging. Further, a guide surface 37a is formed in the seal chamber 36 at the rear end of the cylindrical wall 37. The guide surface 37a is tapered such that the diameter of the guide surface 37a increases in the rearward direction.

The radius R40 of the sealing unit 40 is slightly larger than the radius R37 of the cylindrical wall 37. The sealing unit 40 is therefore press fitted in the seal chamber 36. The sealing unit 40 is installed in the seal chamber 36 before the front housing 13 is attached to the front cylinder block 11. The sealing unit 40 is inserted in the seal chamber 36 from the open rear end of the front housing 13 by way of the guide surface 37a.

First, the tapered surface 451a contacts the guide surface 37a. The tapered surface 451a is guided by the guide surface 37a, which gradually decreases the radius of the first annular projection 451. When the first projection 451 is located within the cylindrical wall 37, the radius of the projection 451 is equal to R37. That is, the first projection 451 is radially compressed by an amount t1, which is the difference between R40 and R37 (t1=R40-R37). When the front end of the sealing unit 40 contacts the front wall 38, the insertion of the sealing unit 40 is completed. At this time, the first annular projection 451 occupies the annular groove 39 and recovers its original shape. In this manner, the first projection 451 is engaged with the annular groove 39. The sealing unit 40 is therefore prevented from being unseated.

When inserting the sealing unit 40 into the seal chamber 36, the second and third annular projections 452, 453 are guided by the guide surface 37a and are then radially compressed between the cylindrical wall 37 and the outer ring 44. When contacting the cylindrical wall 37, the second projection 452 and the third projection 453 are compressed by amounts t2, t3, respectively. The amounts t2, t3 are expressed by an equation t2=t3=R40-R37 and are each equal to t1. When the sealing unit 40 is fitted in the seal chamber 36, the second and third projections 452, 453 are compressed by the amounts t2, t3, respectively (see Fig. 2). The compressed projections 452, 453 are permanently urged against the cylindrical wall 37 once the sealing unit 40 is installed.

The compressor is charged with refrigerant gas after being assembled and installed in the vehicle. Prior to the gas charging, air in the compressor is bled. Air bleeding lowers the pressure in the crank chamber 22 and causes the atmospheric pressure to act on the sealing unit 40. The difference between the forces of atmospheric pressure and the pressure in the crank chamber 22 presses the sealing unit 40 axially toward the crank chamber 22. That is, a force based on the pressure difference presses the sealing unit 40 to unseat the sealing unit 40 from the seal chamber 36. However, the engagement of the first projection 451 with the groove 39 prevents the sealing unit 40 from moving toward the crank chamber 22. The sealing unit 40 is therefore prevented from being unseated.

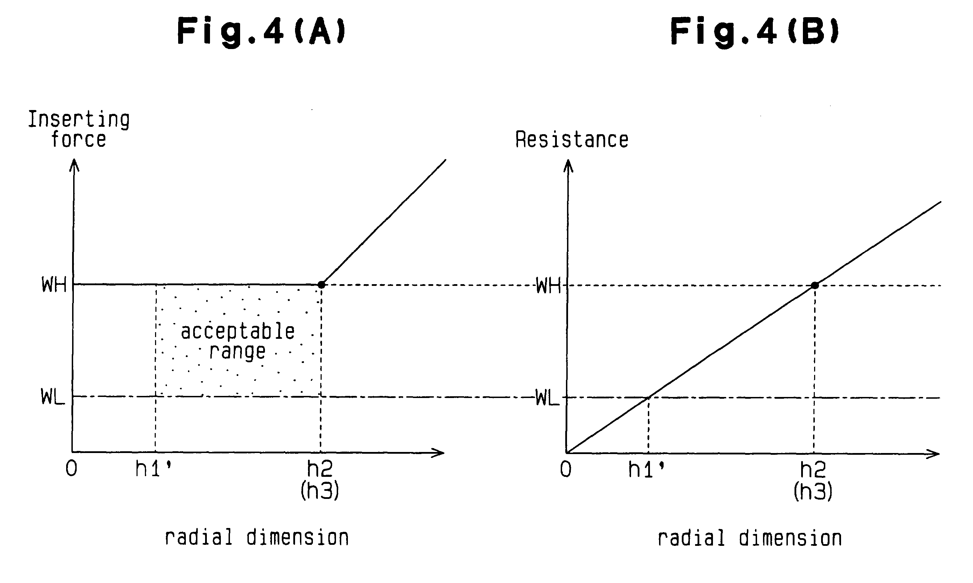

The graph of Fig. 4(A) shows the relationship between the radial dimension (projecting amount) h1 and the force required for inserting the sealing unit 40 into the seal chamber 36. If the radial dimension h1 of the first projection 451 is equal to or smaller than that h2, h3 (h2=h3) of the second and third projections 452, 453, the required force has a constant value WH. This is because, when h1≦h2 and h3, the required force is determined by the radial dimension of the second and third projections 452, 453 and is not affected by changes of the radial dimension h1 of the first projection 451. If the radial dimension h1 of the first projection 451 exceeds the others h2, h3, the required force increases. Therefore, the radial dimension h1 of the first projection 451 is preferably equal to or smaller than that h2, h3 of the second and third projections 452, 453 to minimize the required installation force. This can also be expressed in terms of distances from the central axis X. That is, the outer radius of the first projection 451 is preferably equal to or smaller than that of the second and third projections 452, 453 to minimize the installation force.

The graph of Fig. 4(B) shows the relationship between the radial dimension h1 of the first projection 451 and the force required for removing the sealing unit 40 from the seal chamber 36, or the resistance of the projection 451. An alternate long and short dashed line represents the axial pressure force WL, which results from the atmospheric pressure. If the radial dimension h1 of the first projection 451 is equal to or smaller than a threshold distance h1', that is, if an equation 0≦h1≦h1' is satisfied, the resistance force of the first projection 451 is smaller than the pressure force WL. The threshold value h1' is defined as the difference between the radial dimension h2 and the compression amount t2 of the second projection 452 (h1'=h2-t2). Therefore, if the first radial dimension h1 were equal to or smaller than the value h1', the sealing unit 40 would be unseated by bleeding the compressor. If the first radial dimension h1 is greater than the threshold distance h1', the resistance force of the first projection 451 is equal to or greater than the pressure load force WL. In this case, the sealing unit 40 is not unseated by bleeding the compressor.

This can also be expressed in terms of distances from the central axis X. That is, there is a threshold outer radius of the first projection 451. If the outer radius of the first projection 451 is greater than the threshold radius, then the force resulting from atmospheric pressure cannot axially displace, or unseat, the seal unit 40. If the outer radius of the first projection 451 is equal to or less than the threshold radius, then the atmospheric pressure may unseat the sealing unit 40.

Accordingly, the radial dimension h1 of the first projection 451 is preferably greater than the threshold distance h1' and is preferably equal to or smaller than the radial dimension h2 (or h3). In the first embodiment, the radial dimensions h1, h2, h3 of the projections 451, 452, 453 are the same (h1=h2=h3). However, as long as the first radial dimension h1 is greater than the threshold distance h1' (h1'<h1), the first radial dimension h1 may be smaller than the second and radial dimensions h2, h3 (h1<h2=h3). In terms of distances from the axis X, as long as the outer radius of the first projection 451 is greater than the threshold radius, it may be smaller than the outer radii of the second and third projections.

In the sealing unit 40 of Figs. 1 to 3, the distance by which the first projection 451 extends from the axis X is chosen to be greater than the radius R37 of the cylindrical wall 37.

The sealing unit 40 has the following advantages.

The sealing unit 40 is prevented from being disengaged from the seal chamber 36 and from falling into the housing without the need for a fastener such as a snap ring. When bleeding the compressor, the first projection 451 cannot be disengaged from the annular groove 39. When the compressor is operating, the sealing unit 40 is pressed toward the front wall 38 by the pressure of refrigerant gas in the crank chamber 22. Thus, when the compressor is operating, the sealing unit 40 is securely seated. At this time, the sealing unit 40 requires no structure for preventing it from being disengaged.

The radial dimension h1 of the first projection 451 is substantially equal to the radial dimensions h2, h3 of the second and third projections 452, 453. This structure minimizes the force required for inserting the sealing unit 40 into the seal chamber 36. Thus, the first projection 451 does not hinder the installation of the sealing unit 40.

In the embodiment of Figs. 1 to 4, the radial dimension h1 of the first projection 451 is optimized for facilitating the installation of the sealing unit 40 and for preventing the sealing unit 40 from being unseated during bleeding of the compressor.

The tapered surface 451a, which is formed on the front side of the first projection 451, allows the sealing unit 40 to be smoothly inserted into the seal chamber 36 and minimizes the force required for the insertion of the sealing unit 40. This further facilitates the installation of the sealing unit 40.

The second and third projections 452, 453 are deformed between the cylindrical wall 37 and the outer ring 44. Accordingly, the projections 452, 453 are urged against the cylindrical wall 37 and thus effectively seal the crank chamber 22.

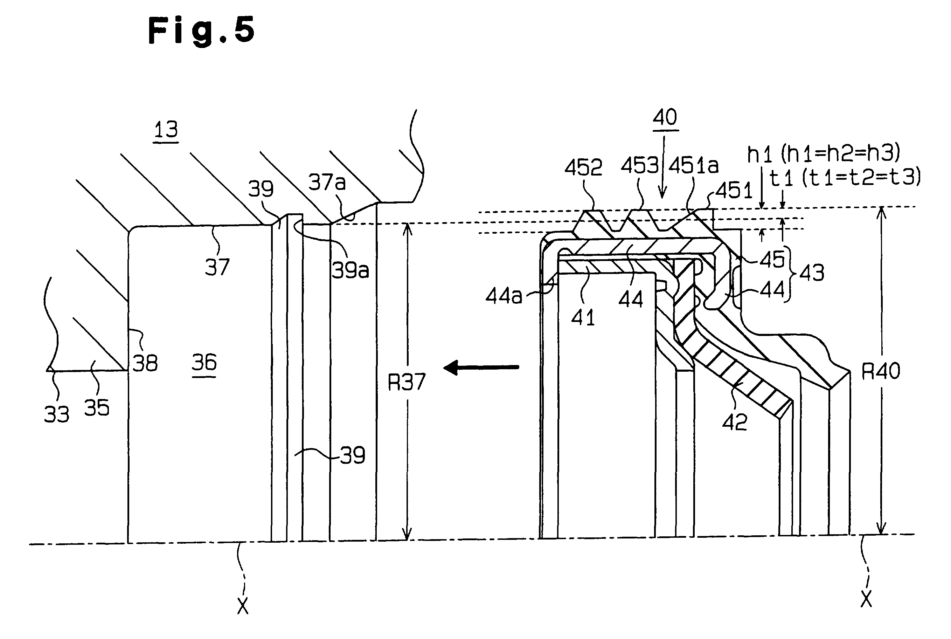

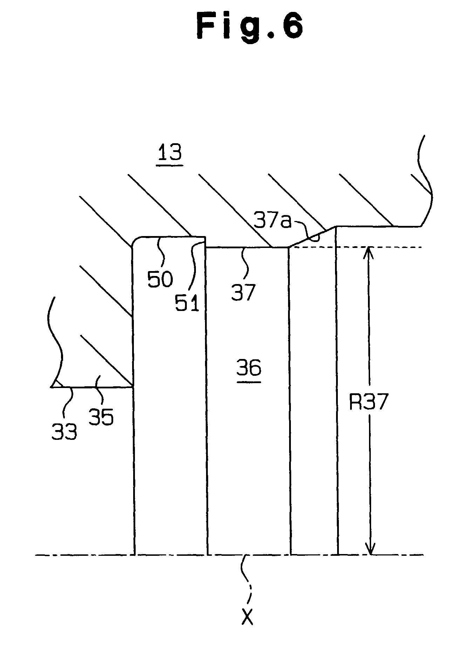

Fifth and sixth embodiments will now be described with reference to Figs. 5 and 6. Like or the same reference numerals are given to those components that are like or the same as the corresponding components of the embodiment of Figs 1 to 4.

In the second embodiment shown in Fig. 5, the first projection 451 is located rearward from the second and third projections 452, 453, and the annular groove 39 is located at a position corresponding to the position of the first projection 451. This construction has the same advantages as the embodiment of Figs. 1 to 4.

In the third embodiment shown in Fig. 6, the annular groove 39 of Figs. 1 to 4 is replaced by a large-radius cylindrical wall 50, which, unlike the groove 39, has no tapered portion. The radius of the large-radius cylindrical wall 50 is larger than the radius R37 of the cylindrical wall 37. The large-radius cylindrical wall 50 and the cylindrical wall 37 define a step 51, which is located at the rear end of the large radius cylindrical wall 50. The rear end of the first projection 451 engages with the step 51. This construction has the same advantages as the embodiment of Figs. 1 to 4.

It should be apparent to those skilled in the art that the present invention may be embodied in many other specific forms without departing from the spirit or scope of the invention. Particularly, it should be understood that the invention may be embodied in the following forms.

The first annular projection 451 and the annular groove 39 may be replaced by a projection and a groove that do not extend along the entire circumference of the outer seal sleeve 45.

One of the second and third projections 452, 453 may be omitted.

The sealing unit 40 may be used in any type of compressor such as a single-headed piston type compressor having a swash plate and a variable displacement compressor.

The present invention may be applied to a seal that is integrated with a bearing.

Therefore, the present examples and embodiments are to be considered as illustrative and not restrictive and the invention is not to be limited to the details given herein, but may be modified within the scope and equivalence of the appended claims.

An easy-to-install sealing unit (40) has a structure for preventing unseating. The sealing unit (40) includes a first annular elastic projection (451) and second and third elastic annular projections (452, 453). The radial dimensions (h1, h2, h3) of the three projections (451, 452, 453) are equal. An annular groove (39) is formed in the inner wall (37) of a housing. When the sealing unit (40) is press fitted against the wall (37), the second and third annular projections (452, 453) are compressed by an amount (t2, t3). The first annular projection (451) is temporarily compressed by an amount (t1) while the sealing unit (40) is being installed. When the sealing unit (40) is installed, the first annular projection (451) regains its original shape and occupies the engaging groove (39a).

## Claims

1. A sealing structure for sealing an opening 33 of a housing, the sealing structure comprising:

    an inner wall fixed with respect to the housing, wherein the inner wall surrounds the opening 33; and
    an engaging groove 39 formed in the inner wall 37, the sealing structure being characterized by:
    a sealing unit 40 press fitted against the inner wall 37, wherein the sealing unit 40 includes:

        a central axis X;
        an elastic sealing projection 452,453 formed on the outer surface of the sealing unit 40, wherein the sealing projection 452,453 is compressed and contacts the inner wall 37; and
        an elastic engaging projection 451 formed on the outer surface of the sealing unit 40, wherein the engaging projection 451 is axially spaced from the sealing projection 452,453, the distance R40 by which the engaging projection 451 extends from the central axis X being equal to or smaller than that of the sealing projection 452,453, wherein, when the sealing unit 40 is fully installed, the engaging projection 451 is engaged with the engaging groove 39.

2. The sealing structure according to claim 1, characterized in that the distance R40 by which the engaging projection 451 extends from the central axis X is greater than that of the sealing projection 452, 453 when the sealing projection is compressed.

3. The sealing structure according to claim 1, characterized in that the sealing unit 40 includes a retaining member 41,44 for retaining the shape of the sealing unit 40, and wherein, when the sealing unit 40 is installed, the sealing projection 452,453 is compressed and held between the retaining member 41,44 and the inner wall 37.

4. The sealing structure according to claim 1, characterized in that the distance R40 by which the engaging projection 451 extends from the central axis X is determined such that the distance t1 by which the engaging projection 451 is temporarily compressed toward the central axis X when the sealing unit 40 is being installed is equal to the distance t2,t3 by which the sealing projection 452,453 is permanently compressed toward the central axis X when the sealing unit 40 is fully installed.

5. The sealing structure according to claim 1, characterized in that the distance R40 by which the engaging projection 451 extends from the central axis X is chosen to be greater than the radius R37 of the cylindrical inner wall 37.

6. The sealing structure according to claim 1, characterized in that the engagement of the engaging projection 451 and the engaging groove 39 retains the sealing unit 40 in a seated position against a pressure force acting on the sealing unit 40.

7. The sealing structure according to claim 1, characterized in that the sealing unit 40 further includes a lip seal 42,45 contacting the outer surface of the shaft.

8. The sealing structure according to claim 7, characterized in that the lip seal 42,45 comprises an elastic material.

9. The sealing structure according to claim 1, characterized in that the sealing unit 40 has a generally cylindrical shape, wherein the annular sealing projection 452,453 is formed on the outer surface of the sealing unit 40, and wherein the annular sealing projection 452,453 contacts the entire cylindrical inner wall 37 when the sealing unit 40 is installed.

10. The cylindrical sealing structure of claim 1, characterized in that the sealing unit 40 seals between the interior and the exterior of a compressor, and at certain times, atmospheric pressure applies an axial outer pressure force to an outer side of the sealing unit 40 that is stronger than an opposite force applied to an inner end of the sealing unit 40 by the interior pressure of the compressor, and wherein the resistance by the sealing unit 40 to axial movement is greater than the outer pressure force.

## Fig.1

# Fig.2

EP 0 940 609 A2

# Fig.3

EP 0 940 609 A2

# Fig.4(A)

Inserting force

WH

WL

acceptable range

0    h1'    h2 (h3)

radial dimension

# Fig.4(B)

Resistance

WH

WL

0    h1'    h2 (h3)

radial dimension

10

# Fig.5

EP 0 940 609 A2

# Fig.6